(19) Europäisches Patentamt / European Patent Office / Office européen des brevets

(11) **EP 4 296 815 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **23176267.5**

(22) Anmeldetag: **31.05.2023**

(51) Internationale Patentklassifikation (IPC):
***G05D 1/00*** *(2024.01)*

(52) Gemeinsame Patentklassifikation (CPC):
**G05D 1/0217; G05D 1/0223; G05D 1/024**

(54) **VERFAHREN ZUM BESTIMMEN EINER TRAJEKTORIE FÜR EIN MOBILES GERÄT**

METHOD FOR DETERMINING A TRAJECTORY FOR A MOBILE DEVICE

PROCÉDÉ DE DÉTERMINATION D'UNE TRAJECTOIRE POUR UN APPAREIL MOBILE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **23.06.2022 DE 102022206291**

(43) Veröffentlichungstag der Anmeldung:
**27.12.2023 Patentblatt 2023/52**

(73) Patentinhaber: **Robert Bosch GmbH
70442 Stuttgart (DE)**

(72) Erfinder:
• **Palmieri, Luigi
70174 Stuttgart (DE)**
• **Lange, Ralph
71277 Rutesheim (DE)**
• **Van Duijkeren, Niels
70806 Kornwestheim (DE)**

(56) Entgegenhaltungen:
**US-A1- 2006 235 610 US-A1- 2021 402 601**

• **TAHA ELMOKADEM: "Advanced Algorithms of Collision Free Navigation and Flocking for Autonomous UAVs", ARXIV.ORG, CORNELL UNIVERSITY LIBRARY, 201 OLIN LIBRARY CORNELL UNIVERSITY ITHACA, NY 14853, 30 October 2021 (2021-10-30), XP091084043**

**Beschreibung**

Die vorliegende Erfindung betrifft ein Verfahren zum Bestimmen einer Trajektorie, entlang welcher sich ein mobiles Gerät, z.B. ein Roboter oder ein sich zumindest teilautomatisiert bewegendes Fahrzeug, in einer Umgebung bewegen soll, eine Recheneinheit und ein Computerprogramm zu dessen Durchführung sowie ein mobiles Gerät.

Hintergrund der Erfindung

Mobile Geräte wie z.B. sich zumindest teilautomatisiert bewegende Fahrzeuge oder Roboter bewegen sich typischerweise entlang einer Trajektorie oder eines Bewegungspfades in einer Umgebung wie z.B. einer Wohnung, in einem Garten, in einer Fabrikhalle oder auf der Straße, in der Luft oder im Wasser. Die Trajektorie wird hierzu z.B. so geplant bzw. bestimmt, dass sie möglichst kurz ist, wenn ein bestimmtes Ziel erreicht werden soll. Dabei sollten Hindernisse bzw. Objekte in der Umgebung berücksichtigt werden.

Verfahren zur Trajektorienplanung sind z.B. aus US 2021/402601 A1, US 2006/235610 A1 sowie TAHA ELMOKADEM: "Advanced Algorithms of Collision Free Navigation and Flocking for Autonomous UAVs", ARXIV.ORG, CORNELL UNIVERSITY LIBRARY, 201 OLIN LIBRARY CORNELL UNIVERSITY ITHACA, NY 14853, 30. Oktober 2021 (2021-10-30), XP091084043 bekannt.

Offenbarung der Erfindung

Erfindungsgemäß werden ein Verfahren zum Bestimmen einer Trajektorie, eine Recheneinheit und ein Computerprogramm zu dessen Durchführung sowie ein mobiles Gerät mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung beschäftigt sich mit mobilen Geräten, die sich entlang einer Trajektorie in einer Umgebung bewegen bzw. bewegen sollen. Eine Trajektorie umfasst hierbei einen Bewegungspfad mit Positionen und/oder Orientierungen des mobilen Geräts und zusätzlich z.B. Zeitpunkte, zu denen diese Positionen und/oder Orientierungen gelten sollen; damit wird also auch eine bestimmte Geschwindigkeit entlang oder auf dem Bewegungspfad vorgegeben. Diese Geschwindigkeit kann entlang des Bewegungspfades auch veränderlich sein, z.B. an Kurven geringer als an geraden Abschnitten. Beispiele für solche mobilen Geräte sind z.B. Roboter und/oder Drohnen und/oder auch sich teilautomatisiert oder (vollständig) automatisiert (zu Land, Wasser oder in der Luft) bewegende Fahrzeuge. Als Roboter kommen z.B. Haushaltsroboter wie Saug- und/oder Wischroboter, Boden- oder Straßenreinigungsgeräte oder Rasenmähroboter in Betracht, ebenso aber auch andere sog. Service-Roboter, als auch sich zumindest teilweise automatisiert bewegende Fahrzeuge z.B. Personenbeförderungsfahrzeuge oder Güterbeförderungsfahrzeuge (auch sog. Flurförderfahrzeuge, z.B. in Lagerhäusern, auch automatisierte Gabelstapler), aber auch Luftfahrzeuge wie sog. Drohnen oder Wasserfahrzeuge.

Das Bestimmen von Bewegungspfaden, und insbesondere von Trajektorien, also ein Bewegungsplanungsproblem für mobile Geräte wie Roboter wird zwar häufig untersucht, allerdings gibt es immer noch Aspekte, die nicht oder nicht ganz bzw. nicht hinreichend gut gelöst sind, und sei es nur, weil solche Probleme fast beliebig komplex werden können. Zu aktuellen und zukünftigen Anforderungen z.B. der Industrie gehören die Unterstützung verschiedener Arten von Roboterkinematiken, die Berücksichtigung dynamischer Eigenschaften und Randbedingungen, die Planung von Trajektorien zwischen Menschen und die intelligente Reaktion auf deren Aktionen sowie die Koordination mit anderen mobilen Geräten in der Umgebung oder im Arbeitsbereich.

Beispielsweise können modellprädiktive Regelungen (MPC) und andere auf numerischer Optimierung basierende Ansätze verwendet werden, um eine gewisse Flexibilität zu erreichen. Eine explizite Berücksichtigung eines Vorhersagemodells wie im Rahmen der MPC bietet z.B. eine natürliche Schnittstelle zur Anpassung an unterschiedliche Kinematiken und dynamische Eigenschaften. Sie ermöglicht auch die Modellierung der sich autonom entwickelnden Umgebung (z.B. auf Grundlage von Vorhersagen über die Bewegung anderer Fahrzeuge, Menschen und Maschinen) und sogar die explizite Modellierung von Interaktionen.

Grundsätzlich kommen verschiedene MPC-basierte Methoden für die Navigation in Betracht. Hierbei können z.B. stochastische Systeme berücksichtigt werden und es kann eine beliebige nichtlineare, nichtkonvexe Kostenfunktion optimiert werden. Aufgrund ihrer stochastischen Natur ist es allerdings schwierig, ein zuverlässiges und gleichmäßiges Verhalten zu erreichen.

Vor diesem Hintergrund wird vorgeschlagen, zunächst ein Ziel (insbesondere ein globales Ziel innerhalb der Umgebung), zu dem sich das mobile Gerät bewegen soll, bereitzustellen, ebenso eine aktuelle Position und/oder Orientierung (sog. Pose) des mobilen Geräts, und außerdem Umgebungsinformationen, die insbesondere Abstände des mobilen Geräts zu Grenzen der Umgebung und/oder Hindernissen in der Umgebung umfassen; solche Umgebungsinformationen können z.B. eine Punktmenge (oder Punktwolke) umfassen, die Abstände des mobilen Geräts (bzw. eines entsprechenden Sensors des Geräts) zu Grenzen der Umgebung (wie z.B. Wände) und/oder Hindernissen in der Umgebung (wie z.B. statische oder mobile Objekte innerhalb der Umgebung) angeben, wobei die Punktmenge insbesondere mittels Laser und/oder Lidar, also z.B. eines Laser- und/oder Lidar-Sensors erhalten worden ist. Alternativ oder zusätzlich zu dem Ziel kann auch ein Referenzpfad bereitgestellt werden, entlang dessen oder in Richtung dessen sich das mobile Gerät (zumindest in etwa) bewegen soll.

Basierend auf den Umgebungsinformationen wird dann ein Bewegungsbereich innerhalb der Umgebung bestimmt, der sich von der aktuellen Position des mobilen Geräts in Richtung des Ziels und/oder des Referenzpfades erstreckt und in dem insbesondere keine Hindernisse für das mobile Gerät vorhanden sind. Dieser Bewegungsbereich muss dabei nicht bis zum Ziel reichen, sondern kann z.B. auch nur lokal einen Teil des möglichen Wegs bis zum Ziel abdecken. Ein solcher Bewegungsbereich kann z.B. auch als Tunnel bezeichnet werden, da er keine Hindernisse umfasst, sondern das Gerät mehr oder weniger direkt darin bewegt werden kann. Insbesondere kann der Bewegungsbereich auch dynamisch sein oder gewisse Abweichungen erlauben, sofern z.B. sich bewegende Hindernisse in der Umgebung vorhanden sind. Das Bestimmen des Bewegungsbereichs erfolgt basierend auf einem Voronoi-Diagramm zumindest eines Teils der Umgebung. Das Voronoi-Diagramm wiederum kann insbesondere basierend auf einer Gitter- und/oder Zellendarstellung der Umgebung bestimmt werden.

Als Voronoi-Diagramm, auch Thiessen-Polygone oder Dirichlet-Zerlegung, wird eine Zerlegung des Raumes (hier also der Umgebung oder eines Teils davon) in Regionen bezeichnet, die durch eine vorgegebene Menge an Punkten des Raumes, auch als Zentren bezeichnet, bestimmt werden. Jede Region wird durch genau ein Zentrum bestimmt und umfasst alle Punkte des Raumes, die in Bezug zur euklidischen Metrik näher an dem Zentrum der Region liegen als an jedem anderen Zentrum. Derartige Regionen werden auch als Voronoi-Regionen bezeichnet. Aus allen Punkten, die mehr als ein nächstgelegenes Zentrum besitzen und somit die Grenzen der Regionen bilden, entsteht das Voronoi-Diagramm.

Innerhalb des Bewegungsbereichs und basierend auf der aktuellen Position und/oder Orientierung des mobilen Geräts wird dann die Trajektorie (die auch einen Bewegungspfad umfasst) bestimmt, entlang welcher sich das mobile Gerät bewegen soll. Die Trajektorie erstreckt sich dabei von der aktuellen Position des mobilen Geräts in Richtung des Ziels bzw. (entlang) des Referenzpfads. Auch hier muss die Trajektorie nicht bis zum Ziel reichen bzw. den ganzen Referenzpfad abdecken, insbesondere auch nicht bis zu einem Rand oder Ende des Bewegungsbereichs, sondern kann z.B. auch nur lokal einen Teil des möglichen Wegs bis zum Ziel abdecken. Vorzugsweise kann nämlich durch wiederholtes Anwenden des Vorgehens, insbesondere auch nach jeweiliger Bewegung des mobilen Geräts, die Trajektorie nach und nach bis zum Ziel bzw. entlang des Referenzpfades bestimmt werden. Die Trajektorie kann hierbei insbesondere auch die Bewegungseigenschaften des mobilen Geräts berücksichtigen, also z.B., ob dieses auf der Stelle wenden kann oder aber z.B. einen gewissen Bewegungsradius zum Umdrehen benötigt. Außerdem kann die Trajektorie mehr oder weniger frei innerhalb des Bewegungsbereichs bestimmt werden (muss also nicht in der Mitte davon liegen), allerdings kann es z.B. aufgrund des Referenzpfades (z.B. eine bestimmte Fahrspur) Beschränkungen geben.

Basierend auf der Trajektorie können dann Bewegungssteuergrößen (also z.B. Ansteuergrößen für das Antriebssystem wie z.B. Momente, Lenkvorgaben und dergleichen) für das mobile Gerät bestimmt und bereitgestellt werden, insbesondere kann das mobile Gerät auch basierend auf den Bewegungssteuergrößen gesteuert werden. Hierzu kann z.B. ein Steuer- und/oder Regeleinheit zum Ansteuern eines Antriebssystems vorgesehen sein.

Es wird also eine Methode vorgeschlagen, die den Bewegungsbereich (den Tunnel) aus den aktuell verfügbaren Daten bestimmt, insbesondere in einer einmaligen Aktion, indem sie einen Pfad (oder ggf. mehrere Pfade) z.B. auf bzw. in einem Voronoi-Diagramm sucht, das dadurch sofort den breitesten Bewegungsbereich liefert. Insbesondere ist es bei der Verwendung der MPC-Strategie auch möglich, eine reaktive und robuste Hindernisvermeidung durchzuführen und gleichzeitig ein nach spezifischen Kriterien optimiertes Geschwindigkeitsprofil entlang des Pfads zu berechnen, also eine Trajektorie

Als Ausgangspunkt für die Überlegungen zu der vorstehend erwähnten Methode kann eine Menge gewöhnlicher Differentialgleichungen betrachtet werden, z.B.:

$$\dot{\boldsymbol{x}}(t) = f(\boldsymbol{x}(t), \boldsymbol{u}(t)), \quad \boldsymbol{x}(0) = \bar{\boldsymbol{x}},$$

die die Kinematik oder Dynamik eines mobilen Geräts beschreiben, der gesteuert werden soll, wobei $x$ und $u$ die Zustände bzw. Eingaben des Systems bezeichnen. Es kann hierbei grundsätzlich davon ausgegangen werden, dass sich das mobile Gerät in einer ebenen bzw. zweidimensionalen Umgebung bewegt bzw. dort navigiert, wobei eine Pose des mobilen Geräts, eindeutig durch seinen Zustand definiert ist. Dies lässt sich jedoch auch auf eine dreidimensionale Umgebung übertragen.

Das Ziel des mobilen Geräts ist es, zu dem vorgegebenen Ziel zu navigieren bzw. sich dorthin zu bewegen. Außerdem kann ein Referenzpfad zum Ziel gegeben sein. Hierbei ist es nicht nötig, dass der gesamte Referenzpfad exakt verfolgt werden kann, z.B., wenn dieser durch ein Hindernis führt. Trotzdem kann für die Erläuterung angenommen werden, dass das Ziel ohne Kollision erreichbar ist.

Ein solcher Referenzpfad kann insbesondere dazu dienen, eine bevorzugte Route zu spezifizieren, die das mobile Gerät wählen soll, falls die Route nicht durch Hindernisse blockiert ist. Grundsätzlich kann auch nur ein Referenzpfad gegeben sein, ohne ein konkretes Ziel, z.B., wenn sich das mobile Gerät (möglichst) im Kreis bewegen soll.

Es ist also wünschenswert, einen Ansatz für die Navigation des mobilen Geräts (Roboternavigation) zu haben, der möglichst die folgenden Ziele erreicht: kollisionsfreie Bewegung, Folgen derselben Homotopieklasse wie den Referenzpfad zur Verbesserung der Verständlichkeit und Effizienz der Roboterbewegung, Erfüllung von Zustands- und Eingabebeschränkungen, sowie quasi-minimale Bewegungsdauer bis zum Ziel.

Das vorgeschlagene Vorgehen umfasst, wie erwähnt, zwei Schritte. Zunächst wird der Bewegungsbereich (Tunnel) bestimmt oder konstruiert, der den kollisionsfreien Raum zum Ziel bzw. Referenzpfad beschreibt, indem ein Pfad im Voronoi-Diagramm gesucht wird. Dann wird innerhalb dieses Bewegungsbereichs eine Trajektorie bestimmt oder geplant; dies erfolgt vorzugsweise mittels MPC, indem ein optimales Steuerungsproblem (OCP) numerisch gelöst wird, das aus modellprädiktiven Wegfolgemethoden abgeleitet sein kann. Im ersten Schritt muss kein bestimmtes Timing des Bewegungsbereichs vorgegeben werden, im Gegensatz z.B. zu Elastic-Band-Methoden. Im MPC-Schritt kann der Optimierer dann z.B. in der Lage sein, selbständig zu entscheiden, wann er sich wo innerhalb des Bewegungsbereichs befindet, indem er z.B. einen pfadverfolgungsähnlichen Steuerungsansatz anwendet.

Durch die Berechnung oder Bestimmung des Bewegungsbereichs auf der Grundlage eines Pfades im Voronoi-Diagramm kann der größte Teil des relevanten freien Raums in der Umgebung, d.h. dort, wo keine Hindernisse sind, effektiv erfasst werden. Dies gibt dem numerischen Optimierungsalgorithmus die Freiheitsgrade, um die Trajektorie in hohem Maße zu optimieren.

Der Bewegungsbereich liegt typischerweise in einer Homotopieklasse möglicher Pfade zum Ziel. Dies ermöglicht eine effiziente Parametrisierung des freien Raums, beschreibt aber im Allgemeinen nicht den gesamten freien Raum. Daher sollte der Bewegungsbereich angemessen gewählt und der optimale Pfad im Voronoi-Diagramm sorgfältig definiert werden.

Zunächst soll das Bestimmen des Bewegungsbereichs näher erläutert werden; dies umfasst, dass die aktuelle Position des mobilen Geräts auf das Voronoi-Diagramm projiziert wird. Dann wird ein Pfad von der aktuellen Position des mobilen Geräts in Richtung des Zieles und/oder (entlang) des Referenzpfades in dem Voronoi-Diagramm bestimmt. Der Pfad wird dann auch an dessen Anfang und/oder an dessen Ende unter Berücksichtigung von Abmessungen des mobilen Geräts erweitert.

Dann wird der Bewegungsbereich basierend auf dem Pfad, insbesondere mittels B-Spline-Parametrisierung bestimmt.

Beim Projizieren der aktuellen Position $p_S$ des mobilen Geräts auf das Voronoi-Diagramm ist ein Ziel insbesondere, einen Punkt $p_V$, der den Mittelpunkt eines Kreises mit Radius $D(p_V)$ darstellt, zu finden, der die folgenden Eigenschaften hat. Eine minimale Entfernung von der aktuellen Position $p_S$ zu einem Rand des Kreises soll $D(p_S)$ sein, und der Punkt $p_V$ soll in dem Voronoi-Diagramm liegen. Dies bedeutet, dass ein Schnittpunkt mit dem Voronoi-Diagramm gesucht wird, der einem Pfad in der entgegengesetzten Richtung des nächsten Hindernisses folgt. Da ein solcher Schnittpunkt nicht unbedingt eindeutig ist, wird ein solcher mit dem größten Abstand zu Hindernissen bevorzugt.

Beim Bestimmen des Pfades im Voronoi-Diagramm ist ein Ziel insbesondere, einen kontinuierlichen Pfad vom Punkt $p_V$ zum Ziel zu finden. Dies kann z.B. unter Bezug auf den erwähnten Referenzpfad erfolgen. Der Pfad im Voronoi-Diagramm sollte ausreichend weit von Hindernissen entfernt sein, damit der Roboter auf dem gesamten Pfad zwischen die umliegenden Hindernisse passt.

Beim Erweitern des Pfades an dessen Anfang und/oder an dessen Ende ist ein Ziel insbesondere, sicherzustellen, dass das mobile Gerät mit seinen Abmessungen in den Bewegungsbereich passt, d.h. dass der gesamte Fußabdruck des mobilen Geräts sowohl für den aktuellen Zustand bzw. die aktuelle Position als auch am Ziel in den Bewegungsbereich passt. Dieser Schritt ist zweckmäßig, da die eingeführte Projektion und das Bestimmen des Bewegungsbereichs für einen einzigen Punkt oder Referenzpunkt auf dem mobilen Gerät stattfinden, d.h. das mobile Gerät wird dabei als ein Punkt betrachtet. Der Anfang kann durch die Suche nach einem Pfad vom Punkt $p_V$ auf dem Voronoi-Diagramm konstruiert werden, bis der gesamte Fußabdruck im Bewegungsbereich liegt, wobei Schnittpunkte mit dem zuvor erhaltenen optimalen Pfad vermieden werden sollten. Dies kann entsprechend für das Ende des Pfads erfolgen.

Beim Bestimmen des Bewegungsbereichs basierend auf dem Pfad, insbesondere mittels B-Spline-Parametrierung, ist ein Ziel insbesondere, den Bewegungsbereich durch eine Mittellinie und den Radius für jeden Punkt entlang der Mittellinie darzustellen. Um diese Parametrisierung zu erhalten, kann ein sequentielles Anpassungsverfahren verwendet werden, das auf dem im Voronoi-Diagramm gefundenen Pfad basiert. Zunächst wird z.B. der mittlere Spline durch Lösen eines Regressionsproblems berechnet. Dann wird z.B. für eine weitere Folge der Radius-Spline berechnet, indem ein weiteres Optimierungsproblem gelöst wird. Ziel ist es insbesondere, den Bewegungsbereich so breit wie möglich zu machen und ihn gleichzeitig innerhalb des hindernisfreien Raums zu halten.

Innerhalb des z.B. auf die erwähnte Weise bestimmten Bewegungsbereichs und basierend auf der aktuellen Position und/oder Orientierung des mobilen Geräts kann dann die Trajektorie bestimmt werden, die sich von der aktuellen Position des mobilen Geräts in Richtung des Ziels bzw. des Referenzpfades erstreckt. Wie erwähnt, kann dies bevorzugt im Rahmen einer modellbasierten, vorzugsweise modellprädiktiven, Regelung (MPC), erfolgen.

Bei der modellprädiktiven Regelung wird z.B.

ein diskretes optimales Steuerungsproblem (OCP) in jeder Abtastzeitinstanz gelöst. Zu diesem Zweck kann die Dynamik des mobilen Geräts in geeigneter Weise diskretisiert werden. Das Ziel dieses optimalen Steuerungsproblems ist insbesondere die Planung von Trajektorien, insbesondere Vorwärtstrajektorien in Richtung auf das Ziel, innerhalb des Bewegungsbereichs, der vorzugsweise B-Spline-parametrisiert ist.

Eine hinreichende Bedingung, die sicherstellt, dass der Fußabdruck des mobilen Geräts in keinem Zustand x einer Kollision unterliegt, lässt sich beispielsweise dadurch erhalten, dass der Fußabdruck durch einen oder mehrere Kreise approximiert wird. Eine Idee der mit dem Bewegungsbereich kombinierten MPC ist es, die nichtlineare Optimierung die Prüfung durchführen zu lassen, während die Zustandstrajektorien optimiert werden.

Eine erfindungsgemäße Recheneinheit, z.B. eine Steuereinheit eines Roboters, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

Figurenbeschreibung

Figur 1 zeigt schematisch ein mobiles Gerät in einer Umgebung zur Erläuterung der Erfindung.

Figur 2 zeigt schematisch einen Ablauf eines Verfahrens in einer bevorzugten Ausführungsform der Erfindung.

Figur 3 zeigt schematisch einen Ablauf eines Verfahrens in einer weiteren bevorzugten Ausführungsform der Erfindung.

Detaillierte Beschreibung der Zeichnung

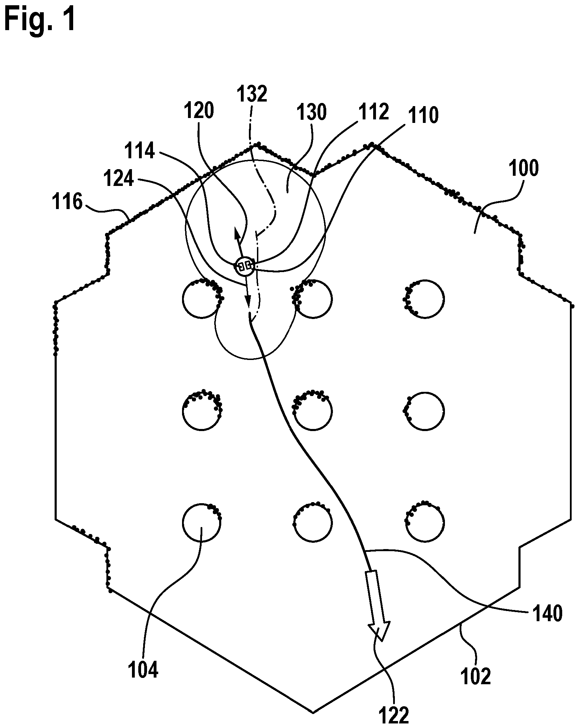

In Figur 1 ist schematisch ein mobiles Gerät 110 einer Umgebung dargestellt, anhand dessen die Erfindung erläutert werden soll. Beispielhaft handelt es sich bei dem mobilen Gerät 110 um einen Roboter wie z.B. einen Wisch- oder Staubsaugerroboter. Es versteht sich, dass das mobile Gerät auch von anderer Art sein kann, wie vorstehend erläutert. Das mobile Gerät 110 weist hierbei ein als Steuereinheit ausgebildete Recheneinheit 112 sowie beispielhaft einen Lidar-Sensor 114 auf.

Die Umgebung ist beispielhaft als ein Raum mit Wänden 102 dargestellt, in dem sich mehrere Hindernisse 104 befinden. Mittels des Lidar-Sensors 114 können darin z.B. Punkte bzw. eine Punktmenge 116 als Umgebungsinformationen erfasst werden.

Das mobile Gerät 110 soll eine aktuelle Position und Orientierung (Pose) haben, die mittels eines Pfeiles 120 dargestellt ist. Ein Ziel, zu dem sich das mobile Gerät 110 bewegen soll, ist mit Position und Orientierung, die das mobile Gerät 110 dort dann einnehmen soll, mittels eines Pfeiles 122 dargestellt.

Weiterhin sind ein Bewegungsbereich 130 mit Mittellinie 132, einen Referenzpfad 140 sowie eine Trajektorie 124 (Bewegungspfad mit Pose und ggf. Zeitpunkten oder Geschwindigkeitsvorgaben) dargestellt, worauf im Rahmen der nachfolgenden Erläuterungen noch näher eingegangen werden soll.

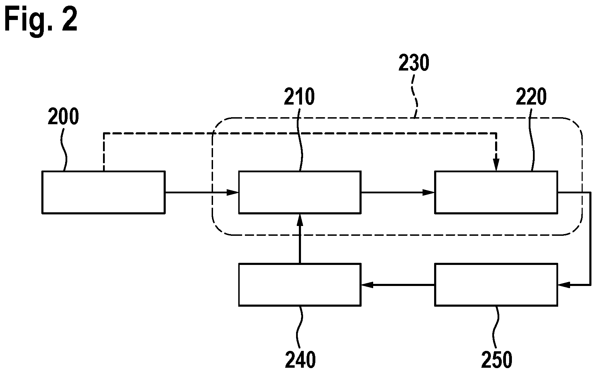

In Figur 2 ist zeigt schematisch ein Ablauf eines Verfahrens in einer bevorzugten Ausführungsform der Erfindung dargestellt, und zwar in Blöcken, die die Zusammenhänge einzelner Aspekte darstellen. In einem Block 200 wird z.B. im Rahmen einer globalen Planung das Ziel bestimmt oder ausgewählt, zu dem sich das mobile Gerät von der aktuellen Position (mit aktueller Orientierung, also Pose) bewegen soll. Es kann auch der Referenzpfad vorgegeben werden.

In einem Block 210 wird der Bewegungsbereich (Tunnel bestimmt). Dies basiert zumindest u.a. z.B. auf der aktuellen Pose, den Umgebungsinformationen, Block 240, sowie dem Ziel und/oder dem Referenzpfad. In einem Block 220 wird eine modellprädiktive Regelung durchgeführt; dabei werden z.B. u.a. basierend auf dem Bewegungsbereich und der aktuellen Pose eine Trajektorie in Richtung auf das Ziel und hierfür entsprechende Bewegungssteuergrößen, also Steuer- oder Regelgrößen, Block 250, zum Ansteuern eines Antriebs des mobilen Geräts bestimmt. Eine Bewegung des mobilen Geräts hat dann wiederum Einfluss auf die Umgebungsinformation bzw. die aktuelle Pose.

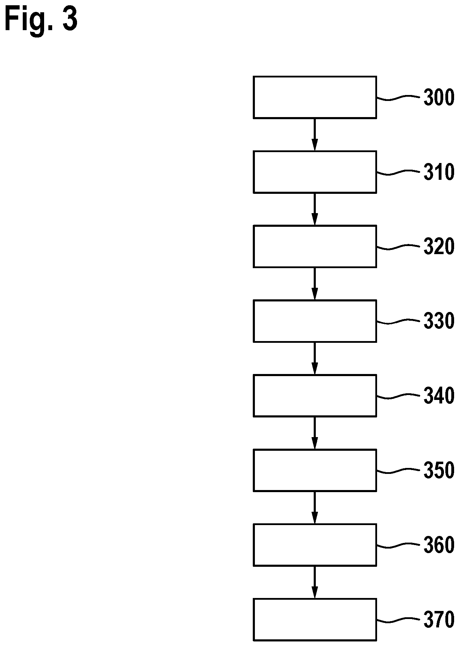

In Figur 3 ist zeigt schematisch ein Ablauf eines Verfahrens in einer weiteren bevorzugten Ausführungsform der Erfindung dargestellt, und zwar als Flussdiagramm. In einem Schritt 300 werden zunächst Eingabewerte für den Algorithmus, auf dem das Verfahren beruht, bestimmt. Dies sind z.B. die erwähnten Umgebungsinformationen, wie z.B. eine Punktmenge, die von einem Lidar-Scan erhalten wir. Diese sind weiterhin z.B. die aktuelle Pose des mobilen Geräts, die wiederum basierend auf den Umgebungsinformationen wie ggf. weiteren, z.B. früheren Posen, bestimmt oder abgeschätzt werden kann. Außerdem können die Eingabewerte das Ziel, insbesondere die Pose des mobilen Geräts am Ziel, sowie den Referenzpfad umfassen.

In einem Schritt 310 kann dann z.B. eine Entfernungskarte bestimmt oder berechnet werden. Dabei wird insbesondere die Position des mobilen Geräts in der Umgebung auf das nächste Hindernis abgebildet (das nächste Hindernis kann z.B. anhand der Umgebungsinformationen bestimmt werden). Beispielsweise kann hierbei eine Gitter- oder Zellendarstellung der Umgebung verwendet werden. Zugleich kann dann das Voronoi-Diagramm, wie vorstehend erläutert, erhalten werden.

In einem Schritt 320 kann dann z.B. die aktuelle Position des mobilen Geräts auf das Voronoi-Diagramm projiziert werden, einem Schritt 330 kann dann ein Pfad von der aktuellen Position des mobilen Geräts in Richtung des Zieles und/oder entlang bzw. in Richtung des Referenzpfades bestimmt werden, und zwar in dem Voronoi-Diagramm. In einem Schritt 340 kann der Pfad am Anfang und Ende oder auch auf seiner gesamten Länge erweitert werden.

In einem Schritt 350 kann dann der Bewegungsbereich bestimmt werden, indem z.B. eine B-Spline-Parametrierung durch Lösen eines Regressionsproblems der kleinsten Quadrate ("least squares") an den Pfad angepasst wird. Der Pfad kann dann abgetastet werden, die Entfernungskarte kann ausgewertet werden. Dann kann durch Lösen eines weiteren Optimierungsproblems der Bewegungsbereich so breit als möglich gemacht werden, während er aber innerhalb des hindernisfreien Raumes bleibt. Der Tunnel (Bewegungsbereich) wird dann durch den Pfad für die Mittellinie (vgl. Figur 1) und einen Radius für jeden Punkt entlang der Mittellinie dargestellt.

In einem Schritt 360 wird dann die Trajektorie bestimmt, und zwar im Rahmen einer modellprädiktiven Regelung. Hierzu können der Zustand (Pose) des mobilen Geräts, der Bewegungsbereich (Tunnel) und die Referenztrajektorie verwendet werden. Dabei kann z.B. eine Zustandstrajektorie (die dann letztlich die gewünschte Trajektorie bildet) optimiert werden, und zwar derart, dass sie bzw. das mobile Gerät sich vorwärts in Richtung auf das Ziel bewegt, und zwar innerhalb des Bewegungsbereichs. Der Fußabdruck des mobilen Geräts kann durch Kreise approximiert werden, sodass das mobile Gerät in keinem Zustand einer Kollision unterliegt; diese Kreise müssen dabei also innerhalb des Bewegungsbereichs bleiben. Zweckmäßig ist es, wen dabei eine Balance zwischen Wünschen oder Vorgaben eines Nutzers und der Erfüllung von Beschränkungen gefunden wird.

In einem Schritt 370 können dann Bewegungssteuergrößen für das mobile Gerät bestimmt werden, mittels welcher das mobile Gerät bzw. dessen Antriebssystem angesteuert wird. Diese Bewegungssteuergrößen können z.B. Sollwerte für Geschwindigkeit und/oder Beschleunigung umfassen, ebenso aber auch Momente für das Antriebssystem.

**Patentansprüche**

1. Verfahren zum Bestimmen einer Trajektorie (124), entlang welcher sich ein mobiles Gerät (110), insbesondere ein Roboter, eine Drohne oder ein sich zumindest teilautomatisiert bewegendes Fahrzeug, in einer Umgebung (100) bewegen soll, umfassend:

   Bereitstellen (300) eines Zieles (122), zu dem sich das mobile Gerät bewegen soll, und/oder eines Referenzpfades (140), entlang dessen sich das mobile Gerät bewegen soll, einer aktuellen Position und/oder Orientierung (120) des mobilen Geräts, und von Umgebungsinformationen (116), die insbesondere Abstände des mobilen Geräts zu Grenzen der Umgebung und/oder Hindernissen (104) in der Umgebung umfassen;
   Bestimmen (320, 330, 340, 350), basierend auf den Umgebungsinformationen, eines Bewegungsbereichs (130) innerhalb der Umgebung, der sich von der aktuellen Position des mobilen Geräts in Richtung des Ziels und/oder des Referenzpfades erstreckt und in dem insbesondere keine Hindernisse für das mobile Gerät vorhanden sind; und
   Bestimmen (360), innerhalb des Bewegungsbereichs und basierend auf der aktuellen Position und/oder Orientierung des mobilen Geräts, der Trajektorie (124), die sich von der aktuellen Position des mobilen Geräts in Richtung des Ziels und/oder des Referenzpfades erstreckt, **dadurch gekennzeichnet, dass** das Bestimmen der Bewegungsbereich basierend auf einem Voronoi-Diagramm zumindest eines Teils der Umgebung bestimmt wird, wobei das Bestimmen des Bewegungsbereichs umfasst:

      Projizieren (320) der aktuellen Position des mobilen Geräts auf das Voronoi-Diagramm;
      Bestimmen (330) eines Pfades von der aktuellen Position des mobilen Geräts in Richtung des Zieles und/oder des Referenzpfades, in dem Voronoi-Diagramm;
      Erweitern (340) des Pfades im Voronoi-Diagramm an dessen Anfang und/oder an dessen Ende unter Berücksichtigung von Abmessungen des mobilen Geräts; und
      Bestimmen (350) des Bewegungsbereichs basierend auf dem Pfad im Voronoi-Diagramm.

**2.** Verfahren nach Anspruch 1, wobei das Voronoi-Diagramm basierend auf einer Gitter- und/oder Zellendarstellung der Umgebung bestimmt wird.

**3.** Verfahren nach Anspruch 1 oder 2, wobei der Bewegungsbereich basierend auf dem Pfad im Voronoi-Diagramm mittels B-Spline-Parametrisierung bestimmt wird.

**4.** Verfahren nach einem der vorstehenden Ansprüche, wobei die Trajektorie (124), im Rahmen einer modellbasierten, vorzugsweise modellprädiktiven, Regelung bestimmt wird.

**5.** Verfahren nach einem der vorstehenden Ansprüche, wobei die Umgebungsinformationen (116) eine Punktmenge umfassen, die Abstände des mobilen Geräts zu Grenzen der Umgebung und/oder Hindernissen in der Umgebung angeben.

**6.** Verfahren nach Anspruch 5, wobei die Punktmenge mittels Laser und/oder Lidar erhalten worden ist.

**7.** Verfahren nach einem der vorstehenden Ansprüche, weiterhin umfassend:

> Bestimmen (370), basierend auf der Trajektorie, von Bewegungssteuergrößen für das mobile Gerät, und
> Bereitstellen der Bewegungssteuergrößen und/oder Bewegen des mobilen Geräts basierend auf den Bewegungssteuergrößen.

**8.** Recheneinheit (112) umfassend einen Prozessor, der so konfiguriert ist, dass er das Verfahren nach einem der vorstehenden Ansprüche ausführt.

**9.** Mobiles Gerät (100) das dazu eingerichtet ist, eine Trajektorie (124), die gemäß einem Verfahren nach einem der Ansprüche 1 bis 6 bestimmt worden ist, oder Bewegungssteuergrößen, die gemäß Anspruch 7 bestimmt worden sind, zu erhalten,

> mit einem Antriebssystem und einer Steuer- und/oder Regeleinheit zum Ansteuern des Antriebssystems basierend auf der Trajektorie, und/oder den Bewegungssteuergrößen, und insbesondere mit einer Recheneinheit (112) nach Anspruch 8,
> und weiter insbesondere mit wenigstens einer Sensoreinheit (114) zum Erfassen von Umgebungsinformationen (116), die insbesondere Abstände des mobilen Geräts zu Grenzen einer Umgebung (100) und/oder Hindernissen in der Umgebung umfassen, wobei das mobile Gerät dazu eingerichtet ist, die Umgebungsinformationen (116) bereitzustellen.

**10.** Mobiles Gerät (100) nach Anspruch 9, das als sich zumindest teilweise automatisiert bewegendes Fahrzeug, insbesondere als Personenbeförderungsfahrzeug oder als Güterbeförderungsfahrzeug, oder als Roboter, insbesondere als Haushaltsroboter, z.B. Saug- und/oder Wischroboter, Boden- oder Straßenreinigungsgerät oder Rasenmähroboter, oder als Drohne ausgebildet ist.

**11.** Computerprogramm umfassend Befehle, die bei der Ausführung des Programms durch einen Computer diesen veranlassen, das Verfahren nach Anspruch 1 bis 7 auszuführen.

**12.** Computerlesbarer Datenträger, auf dem das Computerprogramm nach Anspruch 11 gespeichert ist.

**Claims**

**1.** Method for determining a trajectory (124), along which a mobile device (110), in particular a robot, a drone or a vehicle moving in an at least partially automated manner, is intended to move in an environment (100), comprising:

> providing (300) a destination (122), to which the mobile device is intended to move, and/or a reference path (140), along which the mobile device is intended to move, a current position and/or orientation (120) of the mobile device, and environmental information (116) that includes in particular distances between the mobile device and boundaries of the environment and/or obstacles (104) in the environment;
> determining (320, 330, 340, 350), based on the environmental information, a movement range (130) within the environment, which extends from the current position of the mobile device in the direction of the destination and/or the reference path and in which in particular there are no obstacles for the mobile device; and
> determining (360), within the movement range and based on the current position and/or orientation of the mobile device, the trajectory (124) that extends from the current position of the mobile device in the direction of the destination and/or the reference path,
> **characterized in that** the movement range is determined based on a Voronoi diagram of at least one part of the environment, wherein determining the movement range comprises:
> projecting (320) the current position of the mobile device onto the Voronoi diagram;
> determining (330) a path from the current position of the mobile device in the direction of the destination and/or the reference path in the Voronoi diagram;

extending (340) the path in the Voronoi diagram at its beginning and/or end, taking into account dimensions of the mobile device; and

determining (350) the movement range based on the path in the Voronoi diagram.

2. Method according to Claim 1, wherein the Voronoi diagram is determined based on a grid and/or cell representation of the environment.

3. Method according to Claim 1 or 2, wherein the movement range is determined based on the path in the Voronoi diagram by means of B-spline parametrization.

4. Method according to one of the preceding claims, wherein the trajectory (124) is determined as part of model-based, preferably model predictive, control.

5. Method according to one of the preceding claims, wherein the environmental information (116) includes a set of points indicating distances between the mobile device and boundaries of the environment and/or obstacles in the environment.

6. Method according to Claim 5, wherein the set of points has been obtained by means of laser and/or lidar.

7. Method according to one of the preceding claims, additionally comprising:

determining (370), based on the trajectory, movement control variables for the mobile device, and

providing the movement control variables and/or moving the mobile device based on the movement control variables.

8. Computing unit (112) comprising a processor configured to perform the method according to one of the preceding claims.

9. Mobile device (100) configured to receive a trajectory (124) determined in accordance with a method according to one of Claims 1 to 6, or movement control variables determined according to Claim 7,

having a drive system and a control and/or regulating unit for controlling the drive system based on the trajectory and/or the movement control variables, and in particular having a computing unit (112) according to Claim 8,

and further in particular having at least one sensor unit (114) for capturing environmental information (116) that includes in particular distances between the mobile device and boundaries of an environment (100) and/or obstacles in the environment,

wherein the mobile device is configured to provide the environmental information (116).

10. Mobile device (100) according to Claim 9, which is designed as a vehicle moving in an at least partially automated manner, in particular as a passenger transport vehicle or as a goods transport vehicle, or as a robot, in particular as a household robot, e.g. a suction and/or wiping robot, floor or road cleaning device or robotic lawnmower, or as a drone.

11. Computer program comprising instructions which, when the program is executed by a computer, cause the latter to perform the method according to Claims 1 to 7.

12. Computer-readable data carrier on which the computer program according to Claim 11 is stored.

**Revendications**

1. Procédé de détermination d'une trajectoire (124) le long de laquelle un appareil mobile (110), en particulier un robot, un drone ou un véhicule se déplaçant de manière au moins partiellement automatisée, doit se déplacer dans un environnement (100), comprenant :

fourniture (300) d'une cible (122) vers laquelle le dispositif mobile doit se déplacer et/ou d'un chemin de référence (140) le long duquel le dispositif mobile doit se déplacer, d'une position et/ou d'une orientation actuelle (120) du dispositif mobile, et d'informations d'environnement (116), qui comprennent notamment des distances du dispositif mobile par rapport aux limites de l'environnement et/ou d'obstacles (104) dans l'environnement ;

détermination (320, 330, 340, 350), sur la base des informations d'environnement, d'une zone de déplacement (130) à l'intérieur de l'environnement, laquelle s'étend depuis la position actuelle de l'appareil mobile en direction de la cible et/ou du trajet de référence et dans laquelle il n'existe notamment aucun obstacle pour l'appareil mobile ; et

détermination (360), à l'intérieur de la zone de déplacement et sur la base de la position et/ou de l'orientation actuelle du dispositif mobile, de la trajectoire (124) qui s'étend depuis la position actuelle du dispositif mobile en direction de la cible et/ou du chemin de référence,

**caractérisé en ce que** la détermination de la zone de déplacement est déterminée sur la base d'un diagramme de Voronoï d'au moins une partie de l'environnement, la détermination de la zone de déplacement comprenant :

projection (320) de la position actuelle de l'appareil mobile sur le diagramme de Voronoï ;
détermination (330) d'un chemin depuis la position actuelle du dispositif mobile en direction de cible et/ou le chemin de référence, dans le diagramme de Voronoï ;
extension (340) du chemin dans le diagramme de Voronoï à son début et/ou à sa fin, en tenant compte des dimensions de l'appareil mobile ; et
détermination (350) de la zone de déplacement en se basant sur le chemin dans le diagramme de Voronoï.

2. Procédé selon la revendication 1, le diagramme de Voronoi étant déterminé sur la base d'une représentation en grille et/ou en cellules de l'environnement.

3. Procédé selon la revendication 1 ou 2, la zone de déplacement étant déterminée sur la base du chemin dans le diagramme de Voronoi au moyen du paramétrage d'une B-spline.

4. Procédé selon l'une des revendications précédentes, la trajectoire (124) étant déterminée dans le cadre d'une régulation basée sur un modèle, de préférence prédictive par rapport au modèle.

5. Procédé selon l'une des revendications précédentes, les informations d'environnement (116) comprenant un ensemble de points qui indiquent des distances de l'appareil mobile par rapport à des limites de l'environnement et/ou à des obstacles dans l'environnement.

6. Procédé selon la revendication 5, l'ensemble de points ayant été obtenu au moyen d'un laser et/ou d'un lidar.

7. Procédé selon l'une des revendications précédentes, comprenant en outre :

détermination (370), sur la base de la trajectoire, de variables de référence de déplacement pour l'appareil mobile, et
fourniture des variables de référence de déplacement et/ou déplacement du dispositif mobile sur la base des variables de référence de déplacement.

8. Unité de calcul (112), comprenant un processeur qui est configuré de telle sorte qu'il met en œuvre le procédé selon l'une des revendications précédentes.

9. Appareil mobile (100) qui est conçu pour obtenir une trajectoire (124), laquelle a été déterminée selon un procédé selon l'une des revendications 1 à 6 ou des variables de référence de déplacement qui ont été déterminées selon la revendication 7,

comprenant un système d'entraînement et une unité de commande et/ou de régulation destinée à commander le système d'entraînement sur la base de la trajectoire, et/ou des variables de référence de déplacement, et comprenant notamment une unité de calcul (112) selon la revendication 8,
et en outre comprenant notamment au moins une unité de capteur (114) destinée à acquérir des informations d'environnement (116), qui comprennent notamment des distances de l'appareil mobile par rapport à des limites d'un environnement (100) et/ou des obstacles dans l'environnement,
l'appareil mobile étant conçu pour fournir les informations d'environnement (116).

10. Appareil mobile (100) selon la revendication 9, lequel est réalisé sous la forme d'un véhicule se déplaçant de manière au moins partiellement automatisée, en particulier sous la forme d'un véhicule de transport de personnes ou sous la forme d'un véhicule de transport de marchandises, ou sous la forme d'un robot, notamment sous la forme d'un robot ménager, par exemple un robot d'aspiration et/ou de balayage, un appareil de nettoyage des sols ou des rues ou un robot de tonte de gazon, ou sous la forme d'un drone.

11. Programme informatique comprenant des instructions qui, lors de l'exécution du programme par un ordinateur, amènent celui-ci à mettre en œuvre le procédé selon les revendications 1 à 7.

12. Support de données lisible par ordinateur, sur lequel est stocké le programme informatique selon la revendication 11.

# Fig. 1

# Fig. 2

# Fig. 3

```
┌──────────────┐
│              │──── 300
└──────┬───────┘
       │
       ▼
┌──────────────┐
│              │──── 310
└──────┬───────┘
       │
       ▼
┌──────────────┐
│              │──── 320
└──────┬───────┘
       │
       ▼
┌──────────────┐
│              │──── 330
└──────┬───────┘
       │
       ▼
┌──────────────┐
│              │──── 340
└──────┬───────┘
       │
       ▼
┌──────────────┐
│              │──── 350
└──────┬───────┘
       │
       ▼
┌──────────────┐
│              │──── 360
└──────┬───────┘
       │
       ▼
┌──────────────┐
│              │──── 370
└──────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2021402601 A1
- US 2006235610 A1

**In der Beschreibung aufgeführte Nicht-Patentliteratur**

- Advanced Algorithms of Collision Free Navigation and Flocking for Autonomous UAVs. **TAHA ELMO-KADEM**. ARXIV.ORG. CORNELL UNIVERSITY LIBRARY, 30 October 2021